# EUROPEAN PATENT APPLICATION

(11) **EP 4 826 479 A1**
(43) Date of publication of application: **21.10.2026**
(21) Application number: 25170373.2
(22) Date of filing: 14.04.2025
(51) Int. Cl.: G05D 1/229, G05D 1/248, G05D 1/606, G05D 101/15, G05D 105/28, G05D 107/00, G05D 109/30, G05D 111/50, G06N 20/00, B63H 25/00

(54) **A METHOD AND ARRANGEMENT FOR TRANSITIONING A CONTROL SYSTEM OF A WATERCRAFT TO AN AUTONOMOUS SELF-ADAPTIVE CONTROL SYSTEM**

(71) Applicant: Mindchip OÜ, 10134 Tallinn (EE)
(72) Inventor: Mõlder, Heigo, 10134 Tallinn (EE); Tabri, Kristjan, 10134 Tallinn (EE); Enok, Mart, 10134 Tallinn (EE); Jalakas, Tanel, 10134 Tallinn (EE); Roasto, Indrek, 10134 Tallinn (EE); Möller, Taavi, 10134 Tallinn (EE); Kerstna, Tanel, 10134 Tallinn (EE); Konsa, Pirko, 10134 Tallinn (EE); Janson, Karl, 10134 Tallinn (EE)
(74) Representative: AAA Patendibüroo OÜ

(57) **Abstract**

The invention relates to a method and arrangement for transitioning a control system of a watercraft to an autonomous self-adaptive control system (SAAC-system) installed on said watercraft and connected to said control system of the watercraft. Said SAAC-system during a training phase under human-operated control, including both onboard and remote operation of the watercraft monitors signals and commands (1) within the control system of the watercraft. Said SAAC-system during the autonomous control phase of the watercraft uses the trained SAAC-system model to generate autonomous control signals for the watercraft.

## Description

### Technical Field

Present invention relates to a method and arrangement for transitioning a control system of a watercraft to an autonomous self-adaptive control system (SAAC-system).

In the context of present invention, a watercraft or waterborne vessel is any manned vehicle designed for travel across or through water bodies, such as a boat, ship, hovercraft, submersible, submarine, including such unmanned remotely controlled vehicles, such as unmanned surface vehicles, unmanned surface vessels or uncrewed surface vessels (USV), sometimes also called drone boats, drone ships.

NMEA stands for a National Marine Electronics Association, which has defined standards (such as a NMEA 0183, NMEA 2000) for a combined electrical and data specification for communication between marine electronics such as echo sounder, sonars, anemometer, gyrocompass, autopilot, GPS receivers and many other types of instruments. NMEA 2000 is a standardized communication protocol used in the marine sector (boats, ships etc). It is based on CAN bus and SAE J1939 (used in heavy-duty vehicles).

CAN stands for a Controller Area Network, which is a vehicle bus standard designed to enable efficient communication primarily between electronic control units.

The self-adaptive autonomous control system (SAAC-system) pertains to the field of autonomous watercraft technologies and maritime transport, leveraging advancements in artificial intelligence and machine learning. The system is designed to enable adaptive functionality, allowing it to tailor its control parameters to specific watercraft characteristics and environmental conditions. This adaptability enhances navigation efficiency and operational autonomy. SAAC-system employs deep learning algorithms, sensor data fusion, and real-time environmental analysis to provide robust autonomous control and situational awareness. This patent outlines the innovative method by which the autonomous control system self-adjusts to the watercraft, significantly simplifying and accelerating the integration process, and for improving its seakeeping performance and navigational precision.

### Background Art

The Chinese patent CN111562742A describes a method that enables a watercraft to precisely follow a desired trajectory, compensate for environmental disturbances, eliminate lateral steady-state deviations, and accurately track the target trajectory. The technical solution is based on support vector control and is applicable to watercraft motion control.

The Chinese patent CN118070967A relates to self-adaptive watercraft trajectory prediction using multi-modal data. The method includes the following steps:
- An observation sequence is obtained from AIS data, which is then input into a first machine learning model to generate an intermediate prediction.
- A second observation sequence is obtained from environmental data, which is input into a second machine learning model to produce another intermediate prediction.
- The intermediate predictions are combined and used as training data for a third machine learning model, resulting in the final prediction.

This method addresses issues related to poor adaptability to multi-modal data and low prediction accuracy.

The Chinese patent CN114706402A ("Unmanned Ship Self-Adaptive Motion Planning Method Based on Model Predictive Control") describes a method that enables the adaptive regulation and control of an unmanned watercraft's speed, optimizing its motion trajectory based on environmental obstacle data while adhering to the system constraints of the unmanned watercraft.

The method includes the following steps:
- Generating a collision-free state trajectory that meets the dynamic speed conditions of the unmanned watercraft.
- Constructing a self-adaptive safe state trajectory within the unmanned watercraft's view and detection range.
- Designing a self-adaptive motion planner based on model predictive control.
- Sending the planned motion trajectory to a lower-level tracking controller.
- At each new planning moment, obtaining updated system state and environmental information and continuing rolling planning until the unmanned watercraft reaches the target area.

This method enhances the obstacle avoidance capabilities and planning performance of the unmanned watercraft, allowing the speed to be adaptively adjusted based on the obstacle and environmental conditions.

The Chinese patent CN114706402A ("Unmanned ship self-adaptive motion planning method based on model predictive control") discloses a method for adaptively regulating and controlling the speed of an unmanned watercraft to optimize its motion trajectory based on environmental obstacle data while adhering to system constraints. The method includes:
- Generating a collision-free state trajectory that satisfies the watercraft's dynamic speed conditions;
- Constructing a self-adaptive safe state trajectory within the watercraft's detection and observation range;
- Designing an adaptive motion planner based on model predictive control;
- Sending the planned trajectory to a bottom-layer tracking controller;
- Continuously updating system state and environmental information for rolling trajectory planning until the watercraft reaches the target area.

This method improves obstacle avoidance and planning performance, enabling the watercraft to adaptively regulate its speed and trajectory according to environmental conditions.

The Chinese patent CN115952486A ("Unmanned aerial vehicle command and control system function authority self-adaptive distribution method and device") introduces a method for adaptively distributing control authority in unmanned aerial vehicle (UAV) systems. The method comprises:
- Acquiring the heartbeat standard deviation (SDNN) of a UAV operator over a set time period;
- Determining the operator's heart rate variation, categorized as low, moderate, or high;

- Modifying the operator's control authority based on the heart rate variation: increasing authority when the variation is low and reducing it when the variation is high.

This approach combines the operator's workload with the autonomous system's capabilities, effectively creating a hybrid man-machine intelligent control system that optimally uses human cognitive abilities.

The Chinese patent CN112947504A ("Unmanned underwater vehicle autonomous recovery control system and control method thereof") discloses a system for autonomous recovery of underwater vehicles. The system comprises:
- A catamaran unmanned watercraft motion control system featuring a watercraft robustness controller;
- An L1 self-adaptive controller for underwater vehicle motion;
- Mechanisms to ensure platform stability and high-precision control during recovery operations.

This invention effectively suppresses high-frequency oscillations, is resistant to external disturbances, and enhances recovery efficiency and success rates, offering reliable and precise autonomous recovery of underwater vehicles.

The Chinese patent CN115454099A ("Unmanned ship course active-disturbance-rejection control method based on variable weight adaptive pigeon flock parameter fitting") describes a method for active disturbance rejection in unmanned watercraft navigation. The method involves:
- Developing a three-degree-of-freedom model for the watercraft;
- Establishing an active disturbance rejection controller;
- Introducing a variable weight self-adaptive mechanism for optimization using a pigeon flock algorithm;
- Improving robustness and parameter precision for the controller by optimizing nonlinear functions and ensuring smoother signal transmission.

This method enhances robustness, improves control precision, and reduces signal jitter, ensuring optimal navigation performance under specific conditions.

These existing technologies provide valuable advancements in adaptive motion planning, hybrid control systems, and autonomous recovery, but each addresses specific applications or constraints.

Chinese patent application CN118469043A discloses a ship operation model training method and a ship operation control method. The ship operation model training method comprises the following steps: mapping first input data in each piece of first training data in a plurality of pieces of first training data into a two-dimensional coordinate system through a principal component analysis algorithm to obtain second input data of each piece of first training data. According to the second input data of each piece of first training data, in combination with a grid density method, outlier screening is carried out on the multiple pieces of first training data to obtain multiple pieces of second training data. Configuring a first weight of each piece of second training data according to the density of the grid to which each piece of second training data in the plurality of pieces of second training data belongs. Training the first ship operation model according to each piece of second training data and the first weight of each piece of second training data to obtain a second ship operation model. The ship operation model training method provides improved precision of the ship operation model.

The proposed Self-Adaptive Autonomous Control System (SAAC-system) builds upon these prior innovations by offering a unified, versatile solution for autonomous control, emphasizing rapid integration, continuous adaptation, and efficient operation across diverse maritime applications.

### Disclosure of Invention

The aim of this invention is to propose an autonomous self-adaptive control system, or more precisely, a method that simplifies and accelerates the installation and configuration of autonomous control systems for various types of watercrafts.

Currently, integrating autonomous control systems into the watercrafts is a complex and time-consuming process. It requires the installation of new sensors, control systems, and additional electronics, along with specialized expertise to configure the autopilot and the control commands of the autopilot to the specific configuration of the watercraft. The most significant challenge lies in autopilot tuning, which demands highly skilled specialists and extensive testing under various environmental conditions. Tuning can account for up to 70% of the total integration time (1-3 months), as each watercraft's unique characteristics require an individual approach. This repetitive and costly process slows down innovation and limits the widespread adoption of autonomous systems.

The proposed Self-Adaptive Autonomous Control System (SAAC-system) addresses these issues by significantly reducing the need for human labour and automating the autopilot tuning process. SAAC-system monitors watercraft operations during manned test runs and regular voyages, recording sensor data and dynamically adjusting autopilot parameters. This learning process occurs in the background without disrupting the watercraft's regular operations. After a learning period of 1 to 2 weeks, SAAC-system is ready to take over full control of the watercraft.

The SAAC-system provides a universal and efficiently installable solution, eliminating the need for weeks of manual testing and tuning required by current alternative autonomous control system kits. The SAAC-system begins by intercepting control system signals for the rudders and thrusters (NMEA or CAN) while simultaneously observing the watercraft's response to these signals. Using machine learning, the system learns the parametric relationships between control signals and the watercraft's reactions under various weather conditions.

Additionally, communication protocols are pre-configured for the AI to expedite the learning and interpretation of control signals. Once SAAC-system has learned the relationships between control signals and the watercraft's responses, and trained the control system algorithms, it can take full control of the watercraft. The trained AI model adapts over time by continuously monitoring feedback between control signals and the watercraft's responses (back-loop principle), ensuring ongoing precision and reliability of the system.

### Technical Problem

The technical problem lies in the fact that most watercrafts are custom-built, resulting in significant variations in dimensions, hull designs, hydrodynamic properties, the number of engines, and control systems. Furthermore, watercrafts often utilize different software platforms and communication protocols between devices, which can make integrating new components or replacing existing ones particularly challenging.

Approximately 15% of the time required for integrating an autonomous control system is spent on physical installation, while around 80% is dedicated to calibrating system parameters, such as tuning autopilot settings for acceleration, deceleration, and turning radius. During this integration process, the watercraft remains out of service, unable to perform its primary functions or generate revenue.

The adoption of autonomous watercrafts is hindered by the complex and costly integration process. Significant differences in onboard systems and dynamic characteristics among watercrafts make the installation and calibration of autonomous navigation systems both time-consuming and expensive. The total cost of installing and configuring an autonomous control system can reach hundreds of thousands of euros, depending on the type of watercraft.

These factors make the integration of autonomous control systems slow and expensive, creating a significant barrier to the widespread adoption of autonomous watercrafts. This invention introduces a method using SAAC-system, which transforms the integration process into a fast and efficient operation, offering a solution comparable to a "plug-and-play" integration system. Said method reduces the integration time from several months to just a few weeks.

### Technical Solution

This invention introduces the Self-Adaptive Autonomous Control System (SAAC-system), designed to enable the rapid and efficient integration of autonomous control systems into various types of watercrafts. The SAAC-system leverages AI and machine learning algorithms to independently learn and adapt watercraft control parameters, significantly reducing the need for manual calibration and testing.

The implementation begins with the installation of the SAAC-system on a crewed watercraft. The SAAC-system intercepts and analyses control signals within the watercraft's systems, including those transmitted via NMEA and CAN protocols. These signals encompass electrical inputs from the rudder and throttle controls, as well as engine commands. Concurrently, the system monitors the watercraft's responses to these signals, collecting data such as GPS position, speed, and turning dynamics. Furthermore, SAAC-system gathers environmental data, including wind speed, weather conditions, and wave height, to account for external factors influencing the watercraft's performance.

Using machine learning, the SAAC-system learns the parametric relationships between control signals and the watercraft's corresponding responses. The trained model utilizes an AI language model to interpret communication protocols, streamlining the understanding and processing of control signals. The training process, which may include sea trials or regular operations, typically lasts 1 to 2 weeks.

Once the training process is complete, SAAC-system can autonomously take over watercraft control by generating appropriate control signals for the watercraft's systems. The system also incorporates situational awareness algorithms and dynamic route planning capabilities that comply with COLREG regulations (COLREG = *International Regulations for Preventing Collisions at Sea*), ensuring safe navigation. Additionally, SAAC-system continuously monitors watercraft responses and environmental conditions, enabling the AI to adapt to changes, such as variations in cargo weight or weather conditions.

SAAC-system transforms the integration of autonomous control systems into a fast and straightforward process, offering a "plug-and-play" solution that reduces integration time from months to weeks. Its universality and efficiency pave the way for broader adoption of autonomous watercrafts, lowering costs and enhancing the efficiency and environmental sustainability of maritime transport.

Present invention provides a method for transitioning a control system of a watercraft to an autonomous self-adaptive control system (SAAC-system) installed on said watercraft and connected to said control system of the watercraft. Said method is characterized by comprising the steps, wherein said SAAC-system during a training phase under human-operated control, including both onboard and remote operation of the watercraft:
monitors signals and commands (1) within the control system of the watercraft;
logs the states of engine(s) and thruster(s) (3) of the watercraft and their responses to control commands (1), including at least GPS position, speed, and turning radius (4);
collects environmental data (7), including at least wind speed, wave height and direction;
applies machine learning algorithms (6) to determine and analyze parametric relationships between control signals, engine states, watercraft dynamic responses, and environmental data for generating a SAAC-system control model;
trains said SAAC-system model during a learning phase, which includes sea trials or routine operations (8) of the watercraft;

During an autonomous control phase of the watercraft, said SAAC-system:
uses the trained SAAC-system model to generate autonomous control signals for the watercraft;
collects environmental data, including at least wind speed, wave height and direction;
controls the engine(s) and/or thruster(s) (12) of the watercraft and monitors their responses, including logging GPS position, speed, and turning radius (13);
dynamically adjusts the SAAC-system model to account for real-time environmental conditions (14) during autonomous operation of the watercraft.

According to first embodiment of the invention, said SAAC-system uses an AI language model to interpret communication protocols.

According to another embodiment of the invention, the SAAC-system uses situational awareness algorithms and dynamic route planning capabilities compliant with COLREG regulations to ensure safe and efficient navigation.

According to another embodiment of the invention, the SAAC-system dynamically adapts to variations in watercraft cargo or environmental conditions by continuously monitoring the watercraft's responses and processing real-time feedback.

According to another embodiment of the invention, the SAAC-system, using machine learning, is configured independently determine the hydrodynamic, manoeuvring, seakeeping properties and autonomous control parameters of the watercraft.

Said hydrodynamic properties include for example acceleration, deceleration, turning radius and autonomous control parameters of the watercraft.

Present invention provides an arrangement for transitioning a manual control system of watercraft to an autonomous control system using a SAAC-system installed on said watercraft.

More precisely, present invention provides an arrangement for transitioning a control system of a watercraft to an autonomous self-adaptive control system (SAAC-system) installed on said watercraft and connected to said control system of the watercraft. Said arrangement comprising:
a SAAC-system configured to intercept control signals within the watercraft's systems and monitor responses;
a machine learning modules for training control models using watercraft response and environmental data;
an AI module for interpreting communication protocols and managing control signals;
a situational awareness module that integrates environmental and navigational data into dynamic route planning;
a feedback loop for continuously refining control algorithms based on real-time data;
a system that ensures compliance with navigational regulations, such as COLREG.

According to another embodiment of the invention, said SAAC-system includes mechanisms for rapid deployment and "plug-and-play" integration into various watercraft types and systems.

According to another embodiment of the invention, said SAAC-system includes mechanisms for rapid deployment and "plug-and-play" integration into various watercraft types and systems.

According to another embodiment of the invention, said SAAC-system incorporates a multi-modal data processing module that combines inputs from environmental sensors, watercraft systems, and historical operational data to improve prediction and control accuracy.

According to another embodiment of the invention, said SAAC-system provides continuous real-time monitoring and adaptability to respond to operational changes, including cargo weight shifts or environmental condition variations.

According to another embodiment of the invention, said SAAC-system is configured to dynamically adapt to variations in watercraft cargo or environmental conditions by continuously monitoring the watercraft's responses and processing real-time feedback.

According to another embodiment of the invention, said SAAC-system, using machine learning, is configured to independently determine the hydrodynamic, manoeuvring, seakeeping properties and autonomous control parameters of the watercraft.

Said hydrodynamic properties include for example acceleration, deceleration, turning radius and autonomous control parameters of the watercraft.

### Advantageous Effects

The developed SAAC-system accelerates and simplifies the adoption of Autonomous Surface Watercrafts (ASVs) in the maritime sector. As a result, the number of ASVs is expected to grow, having a significant impact on the efficiency and environmental sustainability of the maritime economy.

### Impact on Employment

- Reduction in traditional roles: automation could lead to a 20-30% reduction in traditional maritime crew positions.
- Increase in high-tech job opportunities: conversely, there could be a 40-50% rise in demand for autonomous systems engineers, data analysts, and cybersecurity specialists.

### Impact on Maritime Economy Turnover

- Increased efficiency: autonomous watercrafts could boost maritime transport efficiency by 15-25%, reducing travel times and fuel consumption through optimized routing.
- Reduced operational costs: the maritime industry could see a 10-20% decrease in operational costs due to lower crew requirements and reduced insurance premiums.

### Environmental Impact

- Lower greenhouse gas emissions: Optimized routing and operations could reduce CO₂ emissions from maritime transport by 10-30%.
- Reduced oil spills and marine pollution: Enhanced navigational precision could decrease oil spills and other forms of marine pollution by 25-35%.

### Overall Impact on the Maritime Economy

- Improved safety: Reducing human errors could decrease maritime accidents by 40-50%.
- Emergence of new business models and services: The sector could see the creation of 30-40% new business models focused on autonomous maritime services.

In summary, the SAAC-system enhances efficiency, safety, and environmental sustainability in the maritime industry, paving the way for innovation and economic growth.

### Brief Description of Drawings

In the following present invention is described in more detail manner with references to the accompanying drawings, where:

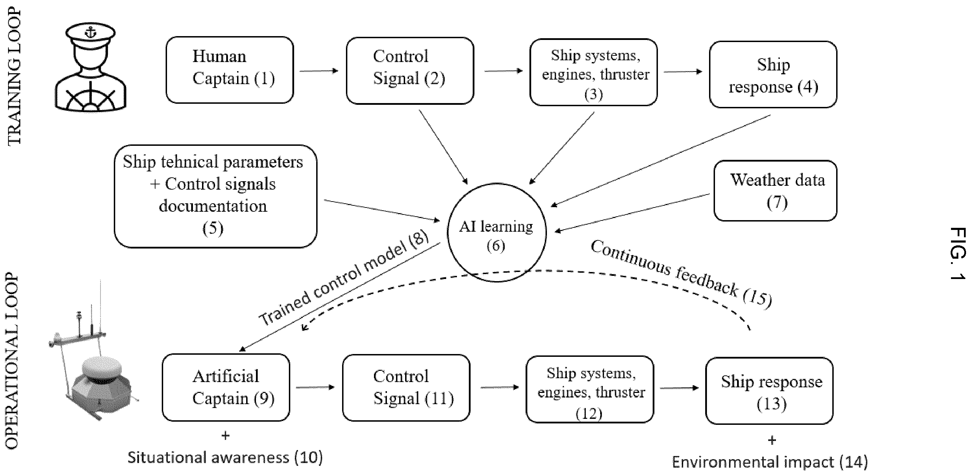

Figure 1 illustrates an operating principle of the SAAC-system used in the method according to present invention.

### Mode(s) for Carrying Out the Invention

This invention introduces the self-adaptive autonomous control system (SAAC-system), designed for the rapid and efficient integration of autonomous control systems into various types of watercrafts. SAAC-system utilizes artificial intelligence and machine learning algorithms to independently learn and adapt watercraft control parameters, significantly reducing the need for manual calibration and testing.

The implementation of the SAAC-system begins with its installation on a crewed watercraft (Figure, point 1). The SAAC-system starts by intercepting and analysing control signals within the watercraft's systems (NMEA and CAN protocols) (points 2 and 3), including electrical signals from the rudder and throttle controls, as well as engine commands. Simultaneously, the system monitors the watercraft's responses to these signals, collecting data such as GPS position, speed, and turning characteristics (point 4).

Additionally, SAAC-system records environmental impact data, including wind speed, weather conditions, and wave height (point 7), to account for external influences. The system employs machine learning techniques (point 6) to establish parametric relationships between control signals and the corresponding watercraft responses. An AI language model supports this process by interpreting communication protocols, accelerating the processing and understanding of control signals (point 5). The training process, which includes sea trials or routine operations, typically lasts 1-2 weeks.

Once the training process is complete, SAAC-system is capable of taking full control of the watercraft by generating appropriate control signals for the watercraft's systems (points 8, 9, and 11). The SAAC-system incorporates situational awareness algorithms (point 10) and dynamic route planning capabilities that adhere to COLREG regulations, ensuring safe and efficient navigation.

Additionally, the SAAC-system continuously monitors the watercraft's responses and environmental conditions (points 13 and 14), enabling the system to adapt to changes such as variations in cargo weight or weather conditions. A feedback loop (point 15) is used to continuously refine the system's algorithms over time.

As an alternative embodiment, the SAAC-system can be integrated into partially autonomous watercrafts where certain control systems and parameters have already been preconfigured. In this case, the training period is shortened, and the system focuses on enhancing existing configurations and adapting to new environmental conditions.

The SAAC-system transforms the integration of autonomous control systems into a fast and straightforward process, providing a near "plug-and-play" solution that reduces integration time from months to weeks. Its universality and efficiency pave the way for the broader adoption of autonomous watercrafts, lowering costs and improving the efficiency and environmental sustainability of maritime transport.

## Claims

1. A method for transitioning a control system of a watercraft to an autonomous self-adaptive control system (SAAC-system) installed on said watercraft and connected to said control system of the watercraft, **characterized in that,** said method comprising the steps, wherein said SAAC-system during a training phase under human-operated control, including both onboard and remote operation of the watercraft:
monitors signals and commands (1) within the control system of the watercraft;
logs the states of engine(s) and thruster(s) (3) of the watercraft and their responses to control commands (1), including at least GPS position, speed, and turning radius (4);
collects environmental data (7), including at least wind speed, wave height and direction;
applies machine learning algorithms (6) to determine and analyze parametric relationships between control signals, engine states, watercraft dynamic responses, and environmental data for generating an SAAC-system control model;
trains said SAAC-system model during a learning phase, which includes sea trials or routine operations (8) of the watercraft;
wherein said SAAC-system during the autonomous control phase of the watercraft:
uses the trained SAAC-system model to generate autonomous control signals for the watercraft;
collects environmental data, including at least wind speed, wave height and direction;
controls the engine(s) and/or thruster(s) (12) of the watercraft and monitors their responses, including logging GPS position, speed, and turning radius (13);
dynamically adjusts the SAAC-system model to account for real-time environmental conditions (14) during autonomous operation of the watercraft.

2. The method according to claim 1, **characterized in that,** wherein said SAAC-system uses an AI language model to interpret communication protocols.

3. The method according to claim 1, **characterized in that,** wherein the SAAC-system uses situational awareness algorithms and dynamic route planning capabilities compliant with COLREG regulations to ensure safe and efficient navigation.

4. The method according to claim 1, **characterized in that,** wherein the SAAC-system dynamically adapts to variations in watercraft cargo or environmental conditions by continuously monitoring the watercraft's responses and processing real-time feedback.

5. The method according to claim 1, **characterized in that,** wherein the SAAC-system, using machine learning, is configured independently determine the hydrodynamic, manoeuvring, seakeeping properties and autonomous control parameters of the watercraft.

6. An arrangement for transitioning a control system of a watercraft to an autonomous self-adaptive control system (SAAC-system) installed on said watercraft and connected to said control system of the watercraft, **characterized in that,** said arrangement comprising:
a SAAC-system configured to intercept control signals within the watercraft's systems and monitor responses;
a machine learning modules for training control models using watercraft response and environmental data;
an AI module for interpreting communication protocols and managing control signals;
a situational awareness module that integrates environmental and navigational data into dynamic route planning;
a feedback loop for continuously refining control algorithms based on real-time data;
a system that ensures compliance with navigational regulations, such as COLREG.

7. The arrangement according to claim 6, **characterized in that,** said SAAC-system includes mechanisms for rapid deployment and "plug-and-play" integration into various watercraft types and systems.

8. The arrangement according to claim 6, **characterized in that,** said SAAC-system includes mechanisms for rapid deployment and "plug-and-play" integration into various watercraft types and systems.

9. The arrangement according to claim 6, **characterized in that,** said SAAC-system incorporates a multi-modal data processing module that combines inputs from environmental sensors, watercraft systems, and historical operational data to improve prediction and control accuracy.

10. The arrangement according to claim 6, **characterized in that,** said SAAC-system provides continuous real-time monitoring and adaptability to respond to operational changes, including cargo weight shifts or environmental condition variations.

11. The arrangement according to claim 6, **characterized in that,** wherein the SAAC-system is configured to dynamically adapt to variations in watercraft cargo or environmental conditions by continuously monitoring the watercraft's responses and processing real-time feedback.

12. The arrangement according to claim 6, **characterized in that,** wherein the SAAC-system, using machine learning, is configured to independently determine the hydrodynamic, manoeuvring, seakeeping properties and autonomous control parameters of the watercraft.
